# EUROPÄISCHE PATENTSCHRIFT

(11) **EP 0 706 773 B1**
(45) Veröffentlichungstag und Bekanntmachung des Hinweises auf die Patenterteilung: **15.07.1998**
(21) Anmeldenummer: 95114074.8
(22) Anmeldetag: 08.09.1995
(51) Int. Cl.: A47J 31/24, A47J 31/58

(54) **Brüheinrichtung für eine Haushalts-Espressomaschine**
Brewing device for an espresso machine for home use
Dispositif à préparer le café express pour usage domestique

(30) Priorität: 10.10.1994 DE 4436080
(43) Veröffentlichungstag der Anmeldung: 17.04.1996
(73) Patentinhaber: Braun Aktiengesellschaft, Frankfurt am Main (DE)
(72) Erfinder: Oppermann, Günter, D-63128 Dietzenbach (DE); Klawuhn, Manfred, D-60322 Frankfurt am Main (DE)

(56) Entgegenhaltungen:
- AT-B- 373 483
- DE-A- 4 026 495
- US-A- 1 774 980
- US-A- 4 763 566

## Beschreibung

Die Erfindung betrifft eine Brüheinrichtung für eine Haushalts-Espressomaschine mit einer mit Kaffeemehl befüllbaren Brühkammer, die ausgangsseitig von einem Sieb und die eingangsseitig von einem in die Brühkammer längs deren Wand eintretenden und diese verschließenden Kolben gebildet wird, so daß von einer Druckquelle kommendes Wasser in die Brühkammer einpreßbar ist, das dann unter Extraktion des Kaffeemehls als Espressogetränk siebseitig aus der Brühkammer abfließt.

Eine derartige Brüheinrichtung für eine Haushalts-Espressomaschine ist bereits aus der US-A-1,774,980 bekannt. Bei dieser Espressomaschine wird bereits heißes Wasser von einer von einem Elektromotor angetriebenen Pumpe angesaugt, komprimiert und einer mit Kaffeemehl füllbaren Brühkammer zugeführt. In Abhängigkeit des Mahl-und Stopfgrades des Kaffeemehls kann sich im Pumpendrucksystem ein zu hoher Druck einstellen, der zu Beschädigungen im Pumpsystem oder zu erhöhten Belastungen an den Dichtungen der Brüheinrichtung führen kann.

Aufgabe der Erfindung ist es, eine Brüheinrichtung für eine Haushalts-Espressomaschine zu schaffen, durch die obige Nachteile vermieden werden und durch die, unabhängig von der Motor- und Pumpenleistung, der Druck im Pumpenkreislauf einen kritischen Wert nicht übersteigt. Dabei sollen die zur Regelung des Drucks erforderlichen Maßnahmen einfach und kostengünstig realisierbar sein.

Diese Aufgabe wird erfindungsgemäß durch die Merkmale des Patentanspruchs 1 gelöst. Durch die Erfindung werden für die Sicherheitseinrichtung keine zusätzlichen Bauteile benötigt, so daß gesonderte Kosten hierfür nicht entstehen. Lediglich die Ausbildung der die Brühkammer mit der Atmosphäre verbindenden Austrittsöffnung bedarf eines geringen Aufwandes, der aber insbesondere dann um so geringer ist, wenn bereits bei der Herstellung der Brühkammer der Kanal in der Wandung mit ausgeformt wird. Es ist aber auch durchaus denkbar, die Austrittsöffnung in einem mechanischen Bearbeitungsvorgang, wie Bohren, Stanzen etc., herzustellen. Die Brühkammer kann vom Siebkorbträger selbst oder von einem gesonderten, in den Siebkorbträger einsetzbaren Siebkorb gebildet werden. Durch die Erfindung dient der Kolben nicht nur als die Brühkammer verschließendes Verschlußelement, sondern zusätzlich noch als Steuerungselement bzw. als Steuerungsglied für die Austrittsöffnung. Bereits Durchmesser von unter 1 mm für die Größe der Austrittsöffnung reichen aus, um den Druck in der Brühkammer auf den maximal zulässigen Wert in kürzester Zeit zu reduzieren. Sobald der Überdruck abgebaut ist, also der maximal zulässige Druck wieder erreicht ist, ist auch die Austrittsöffnung nicht mehr Bestandteil der Brühkammer, d.h., der Kolben trennt durch die relative Verschiebung die Brühkammer dann wieder von der Austrittsöffnung. Die relative Verschiebung des Kolbens gegenüber der Brühkammer ist stets mit einer Volumenveränderung der Brühkammer verbunden, die infolge von den auf den Kolben bzw. auf die Brühkammer einwirkenden Druckkräfte und der damit verbundenen elastischen Verformung der betreffenden Teile verursacht wird.

Eine nennenswerte elastische Verformung der Bauteile wird insbesondere dann ereicht, wenn die bei der elastischen Verformung mitwirkenden Bauteile zumindest teilweise oder ganz aus Kunststoff hergestellt sind, da der Werkstoff Kunststoff, wie beispielsweise Polypropylen, bereits bei verhältnismäßig geringer Belastung besonders gut elastisch dehnbar ist. Hierbei werden die erforderlichen Wege zur Verbindung der Austrittsöffnung mit der Brühkammer zwischen dem Kolben und der Wand der Brühkammer problemlos erreicht. Vorteilhaft ist es aber auch, an den zur relativen Verschiebung betragenden Bauteilen an entsprechenden Stellen elastische Dehnungsfugen oder sonstige bei Kraftbeaufschlagung die Dehnung begünstigende Formgebungen anzubringen, um so eine gezielte und stets wieder nach Beendigung der Druckbeaufschlagung rückgängig zu machende Verschiebung des Kolbens gegenüber der Wand der Brühkammer in Abhängigkeit des Druckes zu erreichen.

Eine relative Verschiebung des Kolbens gegenüber der Brühkammer kann auch dadurch erzielt werden, daß in der Brüheinrichtung eingesetzte Federelemente verwendet werden. Dies bedarf allerdings zusätzlicher Bauteile, was zwangsläufig höhere Kosten erfordern würde.

Gemäß den Merkmalen der Patentansprüche 2 bis 4 kann eine relative Verschiebung entweder nur vom Kolben (Anspruch 2), von der Brühkammer (Anspruch 3) oder von beiden (Anspruch 4) verursacht werden. Eine weitgehendst nur vom Kolben (Anspruch 2) ausgeführte Verschiebung bei Druckerhöhung gegenüber der Wand der Brühkammer erfordert eine äußerst stabile Siebkorbträgerhalteeinrichtung, die dann vorzugsweise aus Stahl, Stahlguß oder Aluminium hergestellt ist. Vorteile hierbei ergeben sich insbesondere in dem Gleitverhalten zwischen dem Kolben und der Bohrung der Brühkammer, da diese auch unter Druck verhältnismäßig konzentrisch zueinander verlaufen also gut fluchten bzw. gut zentriert bleiben. Dies gilt auch im wesentlichen dann, wenn sich nur im wesentlichen die Wand der Brühkammer gegenüber dem Kolben bei Druckerhöhung verschiebt (Anspruch 3). Dabei ist dann der mit dem Kolben versehene Brühkopf verhältnismäßig stabil gegenüber der Abstützung der Brühkammer in der Haushalts-Espressomaschine ausgebildet.

Gemäß den Merkmalen des Patentanspruchs 4 ergibt sich eine besonders einfache Ausführung der Gehäuseausbildung, da beide Teile aus Kostengründen aus gleichem Material, vorzugsweise aus Kunststoff, hergestellt sein können und diese in ihrer Festigkeit so ausgelegt sind, daß beide Abschnitte zusammen bei Druckbeaufschlagung der Brühkammer den für die relative Verschiebung erforderlichen Weg zurücklegen. Die Querschnitte der Teile werden dabei so ausgelegt, daß sich der gewünschte maximale Verschiebeweg gerade bei maximaler Druckbeaufschlagung ergibt; dieser Verschiebeweg liegt bei etwa 4 bis 5 mm im Ausführungsbeispiel.

Durch eine am Kolben ausgebildete Ringdichtung wird die Dichtfläche zwischen dem Kolben und der Brühkammer genau bestimmbar, so daß auch eine exakte Festlegung der Austrittsöffnung gegenüber der Brühkammer möglich ist, um so verhältnismäßig genau den Verschiebeweg festzulegen, in dem die Brühkammer zur Austrittsöffnung hin freigegeben wird. Dabei haben sich insbesondere aus Gummi oder Kunststoff hergestellte, für Kolben an sich bekannte Dichtringe, wie Dichtmanschetten oder Vierkantringe, bewährt.

Gemäß den Merkmalen des Patentanspruchs 6 bildet ein in den Siebkorbträger einsetzbarer Siebkorb mit einem am Boden ausgebildeten Sieb die Brühkammer. Bei dieser Ausführung läßt sich besonders einfach die Austrittsöffnung an der Blechwandung, beispielsweise durch Stanzen oder Bohren, ausbilden. Dabei kann der Siebkorbträger aus weniger festem Material, wie Kunststoff, hergestellt sein, während hingegen die eigentliche Brühkammer beispielsweise aus nichtrostendem Stahl, also äußerst stabil ausgebildet ist.

Sobald bei Druckbeaufschlagung der Brühkammer über einen maximalen Wert eine Verbindung von der Brühkammer zur Austrittsöffnung hergestellt ist, wird ein mit Kaffeemehl durchsetztes Kaffee-Wassergetränk an der Außenseite der Wandung der Brühkammer austreten. Damit dieses Gemisch die Brüheinrichtung nicht unnötig verschmutzt und nicht an irgendeiner Stelle in der Brüheinrichtung lagert und langsam antrocknet, wird dieses Gemisch gemäß den Merkmalen des Patentanspruchs 6 gezielt der Auslaßöffnung der Brüheinrichtung zugeführt, an der es dann in eine darunter abgestellte Espressotasse abfließen kann.

Gemäß den Merkmalen des Patentanspruchs 7 ist es aber auch denkbar, die Austrittsöffnung mittels eines in der Innenwandung der Brühkammer ausgebildeten Kanals herzustellen, wobei beim Eintreten der Kolbendichtung in diesen Austrittsbereich an dieser Stelle eine Undichtigkeit entsteht, über die dann der Überdruck oberhalb des Kolbens zur Atmosphäre hin abgebaut wird. Die Verbindung der Austrittsöffnung zur Auslaßöffnung der Brüheinrichtung kann hier über einen Rohr- oder Schlauchanschluß erfolgen. Im Sinne der Erfindung ist unter Atmosphäre selbstverständlich zu verstehen, daß auch die Austrittsöffnung mit einem Raum niederen Druckes als dem in der Brühkammer maximal entstehenden Druck verbunden sein kann.

Ein Ausführungsbeispiel der Erfindung ist in der Zeichnung dargestellt und wird im folgenden näher erläutert. Es zeigen:

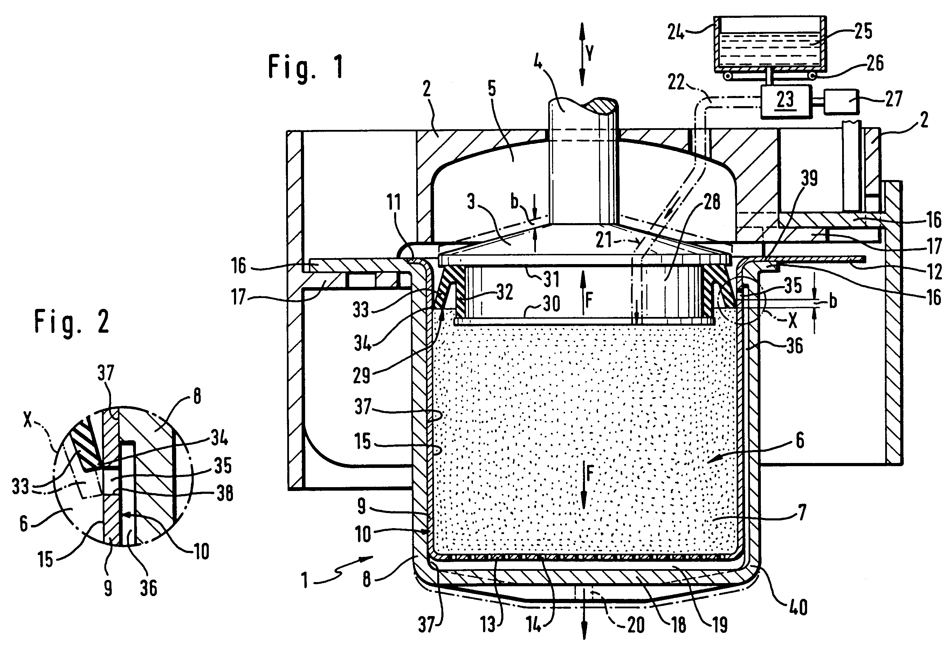

- Fig. 1: Teillängsschnitt im Bereich der Brüheinrichtung bei in die Brühkammer eingefahrenem Kolben vor Einschalten der Druckquelle (Bereitschaftsstellung) und
- Fig. 2: Teilausschnitt X im Bereich der Dichtmanschette nach Fig. 1, in vergrößertem Maßstab, wobei die Dichtmanschette in der unteren Stellung (gestrichelte Stellung) die Stellung einnimmt, bei der gerade in der Brühkammer der maximal zulässige Druck erreicht ist und wobei die obere Stellung der Dichtmanschette (durchgezogene Linien) die Stellung anzeigt, in der der Kolben den ganzen Weg der Austrittsöffnung zur Brühkammer freigibt, was einer Stellung entspricht, die weit über dem maximal zulässigen Druck bzw. weit über dem kritischen Druck liegt.

In Fig. 1 besteht die Brüheinrichtung 1 einer Haushalts-Espressomaschine aus einem oberen Gehäuseteil 2, in dem ein in den Pfeilrichtungen Y senkrecht verschiebbarer Kolben 3 über eine in der Zeichnung nicht näher dargestellte Betätigungseinrichtung verschiebbar ist. Die Betätigungseinrichtung ist über den Stempel 4 mit dem Kolben 3 verbunden. Die Betätigungseinrichtung kann aus einer Exzenter- oder sonstigen Gewindeeinrichtung bestehen, die von Hand einer Bedienungsperson betätigbar ist. Die Betätigungseinrichtung kann aber auch über eine am Kolben 3 direkt angreifende Verstelleinrichtung (Gewinde) gebildet werden, die über einen seitlich am oberen Gehäuseteil 2 herausragenden Hebel (nicht dargestellt) betätigt wird. Bei Verwendung einer Gewindeeinrichtung als Betätigungseinrichtung kann diese vom Kolben 3 und vom oberen Gehäuseteil 2 gebildet werden, wobei dann zur axialen Verschiebung vorzugsweise der Kolben 3 verdreht wird.

In dem oberen Gehäuseteil 2 ist eine Ausnehmung 5 vorgesehen, in die der Kolben 3 mittels einer mechanischen Betätigungsvorrichtung dann zurückgefahren wird, wenn eine im unteren Gehäuseteil 8 in einer zylindrischen Bohrung 37 aufgenommene Brühkammer 6 mit Kaffeemehl 7 beschickt werden soll. Die Brühkammer 6 wird von einer zylindrischen Bohrung 15 gebildet, die Bestandteil der Wand 9 eines aus Blech ausgeformten Siebkorbes 10 ist, der an seinem oberen Rand 11 eine seitlich nach außen ragende Handhabe 12 aufweist. Der Siebkorb 10 wird von einem topfförmigen Behältnis gebildet, das an seinem Boden 13 Sieblöcher 14 aufweist. Der zylindrische Siebkorb 10 ist in die zylindrische Bohrung 37 des unteren Gehäuseteils 8 so spielfrei eingesetzt, daß er auch leicht wieder aus der Bohrung 37 zum Entfernen bzw. Einfüllen von Kaffeemehl entfernt werden kann.

Der untere Gehäuseteil 8 ist ein aus dem oberen Gehäuseteil 2 herausnehmbares und gegenüber diesem schwenkbares Teil und bildet den eigentlichen Siebkorbträger 8 für den Siebkorb 10. Der Siebkorbträger 8 ist über eine in der Zeichnung nicht näher dargestellte Drehachse schwenkbar am oberen Gehäuseteil 2 gelagert und stützt sich in der in Fig. 1 dargestellten Betriebsstellung über an ihm ausgebildete Abstützarme 16 in Form von kreisbogenförmig ausgebildeten Abschnitten an entsprechend am oberen Gehäuse 2 ausgebildeten Wandflächen 17 ab. Der Siebkorb 10 stützt sich über seinen oberen Rand 11 an dem oberen Rand 39 des Siebkorbträgers 8 ab. In der in Fig. 1 dargestellten Betriebsstellung ist zwischen dem Boden 13 des Siebkorbes 10 und dem Boden 18 des Siebkorbträgers 8 ein Freiraum 19 ausgebildet, über den das unter anderem aus den Sieblöchern 14 austretende Brühgetränk einer im Boden 18 ausgebildeten Auslaßöffnung 20 (gestrichelt dargestellt) zugeführt wird. Unter die Auslaßöffnung 20 stellt man zum Auffangen des Brühgetränks eine Espressotasse (nicht dargestellt) oder ein sonstiges Gefäß.

Der Kolben 3 wird von einer Bohrung 21 durchdrungen, die über eine flexible Leitung 22 mit einer in der Brüheinrichtung 1 ausgebildeten Pumpe 23 verbunden ist, die das in einem Wasserbehälter 24 von einer Heizung 26 erhitzte Wasser 25 ansaugt und dem Kolben 3 unter Druck zuführt. Die Pumpe 23 wird von einem Elektromotor 27 angetrieben. Zur Vereinfachung wurden diese Teile 23 bis 27 nur schematisch in der Zeichnung dargestellt und dienen daher nur zum besseren Verständnis.

Nach Fig. 1 weist der Kolben eine Ringnut 28 auf, die zur Aufnahme einer Dichtmanschette 29 dient. Die Dichtmanschette wird von den die Ringnut 28 seitlich begrenzenden und ringförmig ausgebildeten Stirnflächen 30, 31 am Kolben 3 axial und radial gehalten. Die Dichtmanschette 29 weist einen U-förmig ausgebildeten Querschnitt auf, wobei der radial innere Ringbereich 32 die Abdichtung zur Ringnut 28 und der radial äußere Bereich die Abdichtung zur Bohrung 15 und so die eigentliche Dichtlippe 33 bildet, die mit der Innenwandung der zylindrischen Bohrung 15 des Siebkorbes 10 in Gleiteingriff steht. Die Dichtlippe 33 weist an ihrem vorderen Ende eine Dichtkante 34 auf, die die eigentliche Dichtfläche mit der zylindrischen Bohrung 15 bildet.

Nach den Figuren 1 und 2 ist in der Bereitschaftsstellung des Kolbens 3 oberhalb der Dichtkante 34 in der zylindrischen Bohrung 15 eine Austrittsöffnung 35 ausgebildet, die die Wand 9 des Siebkorbes 10 durchdringt, was allerdings in Fig. 2 besser erkennbar ist. Geringfügig oberhalb der Austrittsöffnung 35 beginnt eine Rille 36, die eine Vertiefung in der Innenwandung 37 des Siebkorbträgers 8 darstellt. Die Rille 36 verläuft längs der Innenwandung 37 senkrecht nach unten und endet in den Freiraum 19 an der Stufe 40. Nach Fig. 1 ist die Dichtkante 34 der Dichtlippe 33 um das Maß b von der Unterkante 38 (Fig. 2) der Austrittsöffnung 35 entfernt.

Die Wirkungsweise der erfindungsgemäßen Brüheinrichtung ist folgende:

Nachdem die Brühkammer 6 mit Kaffeemehl 7 befüllt wurde, kann der aus dem oberen Gehäuseteil 2 um eine Drehachse (nicht dargestellt) ausgeschwenkte Siebkorbträger 8 mit dem Siebkorb 10 in die in Fig. 1 dargestellte Stellung eingeschwenkt werden. Nun wird über eine in der Zeichnung nicht dargestellte Betätigungseinrichtung der Kolben 3 von oben her in die Brühkammer 6 eingefahren, bis er die in Fig. 1 angezeigte Stellung eingenommen hat (Bereitschaftsstellung). Dabei kann der Kolben 3 gerade an der Oberseite des Kaffeemehls 7 anliegen, es ist aber auch denkbar, daß weniger Kaffeemehl 7 in der Brühkammer 6 vorhanden ist, so daß ein Freiraum (nicht dargestellt) zwischen dem Kolben 3 und der Oberfläche des Kaffeemehls 7 entsteht. Beim Einfahren des Kolbens 3 in die Brühkammer 6 gleitet die Dichtkante 34 der Dichtlippe 33 bereits an der Wandung 9 der zylindrischen Bohrung 15 und dichtet die Brühkammer 6 nach oben hin zur Atmosphäre ab.

Wird nun der Elektromotor 27 eingeschaltet, saugt die Pumpe 23 Heißwasser 25 aus dem Behälter 24 an, was über die Leitung 22 und die Bohrung 21 zunächst in den oberen Abschnitt der Brühkammer 6 gelangt. Dabei wird aus dem Behälter 24 das durch die elektrische Heizeinrichtung 26 aufgeheizte Wasser 25 zur Brühkammer 6 gefördert. Da das Wasser 25 das Kaffeemehl 7 nicht so schnell durchdringen kann, wird in der Brühkammer 6 unter weiterer Förderung von Heißwasser 25 ein gewünschter Überdruck erreicht, wodurch die Dichtlippe 33 noch stärker gegen die zylindrische Bohrung 15 gepreßt wird (Betriebsstellung). Je mehr heißes Wasser 25 in die Brühkammer 6 gelangt, um so mehr steigt der Druck dort an. Dabei durchdringt das Heißwasser das Kaffeemehl 7 von oben nach unten immer mehr, extrahiert Aroma- und Geschmacksstoffe aus dem Kaffeemehl, bis an den Sieblöchern 14 das extrahierte Getränk in den Freiraum 19 eintritt und von dort über die Auslaßöffnung 20 einer darunter abgestellten Espressotasse (nicht dargestellt) zugeführt wird. Durch das das Kaffeemehl unter Druck (etwa 15 bar) durchdringende Heißwasser entsteht ein Espresso mit Cremabildung.

Aufgrund des in der Brühkammer 6 ansteigenden Drucks wird auf die Fläche des Kolbens 3 eine Kraft F ausgeübt, die im oberen Gehäuseteil 2 abgestützt werden muß. Gleiches gilt für die nach unten wirkende Druckkraft F, die auf das Kaffeemehl 7 und von dort über den Boden 13 auf den oberen Rand 11 des Siebkorbs 10 zu den Abstützarmen 16 des Siebkorbträgers 8 übertragen wird. Diese Druckkraft F wird dann auf die Wandfläche 17 in das Gehäuse der Brüheinrichtung 1 übergeleitet und wird dort abgefangen. Aufgrund dieser durch den Druck in der Brühkammer 6 entstehenden Druckkraft F ergibt sich eine elastische Verformung im Übertragungsweg vom Kolben über den Stempel 4 und von dort über die mechanische Betätigungsvorrichtung (nicht dargetellt) zum oberen Gehäuseteil 2 hin, so daß der Kolben 3 bei ansteigendem Druck solange zur Austrittsöffnung hin nach oben verschoben wird, bis sich die Dichtkante 34 der Dichtmanschette 29 an die Unterkante 38 der Austrittsöffnung 35 genähert hat, wobei das Maß b Null wird (siehe gestrichelte Stellung der Dichtlippe 33 in Fig. 2). Auch durch die elastische Verformung des Siebkorbträgers 8 im Bereich seiner an das Gehäuse der Brüheinrichtung 1 angebundenen Übertragungsteile (nicht dargestellt), die mit den Wandflächen 17 einteilig verbunden sind, verschiebt sich auch der Siebkorbträger 8 in der Zeichnung nach unten, so daß auch dadurch die Unterkante 38 der Austrittsöffnung 35 geringfügig nach unten wandert. Je größer der Druck in der Brühkammer 6 wird, desto größer ist die elastische Verformung und desto größer ist die relative Verschiebung zwischen dem Kolben 3 und der Austrittsöffnung 35.

Übersteigt der Druck in der Brühkammer 6 einen kritischen Wert, so wandert der Kolben 3 mit seiner Dichtkante 34 soweit nach oben (siehe beispielsweise die obere Stellung der Dichtlippe 33 nach Fig. 2), daß dieser die Austrittsöffnung 35 freigibt und sich der Druck in der Brühkammer 6 durch Austreten von Flüssigkeit (eventuell auch einige Körner an Kaffeemehl) und/oder Luft über die Austrittsöffnung 35 abbauen kann. Dabei gelangt das austretende Gemisch in die Rille 36 und fließt nach unten in den Freiraum 19 ab, von wo auch dieses Gemisch über die Auslaßöffnung 20 in eine unter der Auslaßöffnung 20 abgestellte Espressotasse (nicht dargestellt) abtropfen kann.

Sobald sich der Druck in der Brühkammer 6 wieder auf den maximal zulässigen Wert oder kleiner abgebaut hat, wandert der Kolben 3 so weit nach unten bzw. das untere Gehäuseteil 8 soweit nach oben, bis die Dichtkante 34 die Unterkante 38 der Austrittsöffnung 35 erreicht und diese wieder verschließt (Maß b wieder Null). Diese Bewegung des Kolbens 3 erfolgt durch die aufgrund der elastischen Verformung zwischen dem oberen und unteren Gehäuseteil 2, 8 entstandenen Spannkräfte. Senkt sich der Druck noch weiter, so nimmt das Maß b wieder zu, d.h., der Kolben 3 wird durch die aufgrund der elastischen Verformung gebildeten Spannkräfte noch weiter in die Brühkammer 6 zurückbewegt.

Nach der Extraktion des Kaffeemehls 7 und dem fertiggestellten Espressogetränk wird die Pumpe 23 ausgeschaltet, wodurch auch der Druck in der Brühkammer 6 wieder restlos abgebaut wird. Der Kolben 3 nimmt gegenüber der Austrittsöffnung 35 wieder die in Fig. 1 dargestellte Ausgangsstellung (Maß b) ein. Der Kolben 3 kann nunmehr durch die Betätigungseinrichtung (nicht dargestellt) aus der Brühkammer 6 herausgefahren werden. Anschließend kann der Siebkorbträger 8 aus dem oberen Gehäuseteil 2 herausgeschwenkt und der Siebkorb 10 mittels der Handhabe 12 aus der Innenwandung 37 des Siebkorbträgers 8, zum Entfernen des Kaffeemehls 7 aus der Brühkammer 6, herausgehoben werden.

## Patentansprüche

1. Brüheinrichtung (1) für eine Haushalts-Espressomaschine mit einer mit Kaffeemehl (7) befüllbaren Brühkammer (6), die ausgangsseitig mit einem Sieb (14) versehen ist und die eingangsseitig von einem in die Brühkammer (6) längs deren Wand eintretenden und diese verschließenden Kolben (3) gebildet wird, so daß von einer Druckquelle kommendes Wasser in die Brühkammer (6) einpreßbar ist, das dann unter Extraktion des Kaffeemehls als Espressogetränk siebseitig aus der Brühkammer (6) abfließt,
**dadurch gekennzeichnet**,
daß im Strömungsweg des Wassers zwischen der Druckquelle und der Brühkammer (6) eine auf einen kritischen Druck im Drucksystem ansprechende Sicherheitseinrichtung ausgebildet ist, daß die Sicherheitseinrichtung aus einer zwischen dem Kolben (3) und der Wand der Brühkammer (6) ausgebildeten, mit der Atmosphäre verbundenen Austrittsöffnung besteht, daß sich bei unter normalen Betriebsbedingungen herrschenden Druckverhältnissen die Austrittsöffnung außerhalb der Brühkammer (6) befindet und daß bei über einen kritischen Wert ansteigendem Druck eine derartige relative Verschiebung des Kolbens gegenüber der Wand der Brühkammer erfolgt, daß die Austrittsöffnung Bestandteil der Brühkammer (6) wird.

2. Brüheinrichtung nach Anspruch 1,
**dadurch gekennzeichnet**,
daß die relative Verschiebung dadurch zustande kommt, daß sich der Kolben gegenüber der Wand der Brühkammer infolge der durch die Druckerhöhung in der Brühkammer auftretenden Druckkräfte elastisch verschiebt.

3. Brüheinrichtung nach Anspruch 1,
**dadurch gekennzeichnet**,
daß die relative Verschiebung dadurch zustande kommt, daß sich die Wand der Brühkammer gegenüber dem Kolben infolge der durch die Druckerhöhung in der Brühkammer auftretenden Druckkräfte elastisch verschiebt.

4. Brüheinrichtung nach Anspruch 1,
**dadurch gekennzeichnet**,
daß die relative Verschiebung dadurch zustande kommt, daß sich sowohl der Kolben wie die Wand der Brühkammer infolge der durch die Druckerhöhung in der Brühkammer auftretenden Druckkräfte elastisch verschieben.

5. Brüheinrichtung nach einem der Ansprüche 2 bis 4,
**dadurch gekennzeichnet**,
daß die Austrittsöffnung aus einer in der Wand der Brühkammer ausgebildeten Bohrung besteht, daß an dem Kolben (3) eine an der Innenwandung der Brühkammer druckdicht anliegende Ringdichtung befestigt ist, die bei relativer Verschiebung des Kolbens (3) die Bohrung überfährt und dabei die Brühkammer mit der Atmosphäre verbindet.

6. Brüheinrichtung nach Anspruch 4,
**dadurch gekennzeichnet**,
daß die Brühkammer (6) von einem topfförmigen Siebkorb gebildet wird, daß der Siebkorb in einem wiederum topfförmigen Siebkorbträger einsetzbar ist und daß die im Siebkorb ausgebildete Austrittsöffnung im Betrieb der Brüheinrichtung in einem zwischen dem Siebkorb und dem Siebkorbträger ausgebildeten Kanal mündet, der mit dem Auslaß der Brühkammer verbunden ist.

7. Brüheinrichtung nach Anspruch 4,
**dadurch gekennzeichnet**,
daß die Austrittsöffnung von einer an der Innenwand der Brühkammer (6) ausgebildete Rille gebildet wird, die längs der Längsachse der Brühkammer (6) verläuft.

## Claims

1. A brewing device (1) for a domestic espresso maker, comprising a brewing chamber (6) adapted to be filled with coffee grounds (7), said brewing chamber having on its outlet side a filtering means (14) and on its inlet side a piston (3) entering the brewing chamber (6) along the wall thereof and closing said chamber, so that water arriving from a source of pressure can be forced into the brewing chamber (6) to subsequently flow out of the brewing chamber (6) at the end close to the filtering means as an espresso beverage, extracting the coffee grounds in the process,
**characterized in that** a safety device responsive to a critical pressure in the pressure system is provided in the path of flow of the water between the source of pressure and the brewing chamber (6), that the safety device has an outlet orifice communicating with atmosphere and positioned between the piston (3) and the wall of the brewing chamber (6), that in the presence of pressures prevailing under normal operating conditions the outlet orifice is outside the brewing chamber (6), and that in the presence of a pressure exceeding a critical value a displacement of the piston relative to the wall of the brewing chamber occurs, such as to cause the outlet orifice to become part of the brewing chamber (6).

2. The brewing device as claimed in claim 1,
**characterized in that** said relative displacement takes place by reason of the piston displacing elastically relative to the wall of the brewing chamber as a result of the forces occurring due to pressure increase in the brewing chamber.

3. The brewing device as claimed in claim 1,
**characterized in that** said relative displacement takes place by reason of the wall of the brewing chamber displacing elastically relative to the piston as a result of forces occurring due to pressure increase in the brewing chamber.

4. The brewing device as claimed in claim 1,
**characterized in that** said relative displacement takes place by reason of both the piston and the wall of the brewing chamber displacing elastically as a result of forces occurring due to pressure increase in the brewing chamber.

5. The brewing device as claimed in any one of the claims 2 to 4,
**characterized in that** said outlet orifice comprises a bore provided in the wall of the brewing chamber, that a ring seal engaging the inner wall of the brewing chamber in a pressure-tight relationship thereto is secured to the piston (3), said seal overtraveling the bore on relative displacement of the piston (3), connecting the brewing chamber to atmosphere.

6. The brewing device as claimed in claim 4,
**characterized in that** said brewing chamber (6) comprises a cup-shaped filter basket, said filter basket is insertable into a cup-shaped filter basket holder, and that, with the brewing device in operation, the outlet orifice provided in the filter basket opens into a channel formed between the filter basket and the filter basket holder, said channel communicating with the discharge port of the brewing chamber.

7. The brewing device as claimed in claim 4,
**characterized in that** said outlet orifice is formed by a groove provided on the inner wall of the brewing chamber (6) and extending along the longitudinal axis of the brewing chamber (6).

## Revendications

1. Dispositif à boissons chaudes (1) pour une machine à café ménagère du type "espresso" comprenant une chambre collectrice d'infusion (6) destinée à contenir la mouture de café (7), pourvue, du côte de sortie d'une passoire (14) et formée du côté d'entrée d'un piston (3) qui entre dans la chambre collectrice d'infusion (6) le long de sa cloison et la ferme de sorte que l'eau provenant d'une source de pression est injectée dans la chambre collectrice d'infusion (6) et sort de la chambre collectrice d'infusion (6) du côté de la passoire lors de l'extraction de la mouture de café comme boisson du type espresso,
**caractérisé en ce que**
dans le sens d'écoulement de l'eau entre la source de pression et la chambre collectrice d'infusion (6) il y a une installation de sécurité qui réagit à une pression critique dans le système de pression, que cette installation de sécurité consiste en un orifice de sortie situé entre le piston (3) et la cloison de la chambre collectrice d'infusion (6) et lié à l'atmosphère, en ce que dans des conditions de fonctionnement normales l'orifice de sortie se trouve en dehors de la chambre collectrice d'infusion (6) et qu'à une pression au-dessus d'une certaine valeur critique le piston se déplace par rapport à la cloison de la chambre collectrice d'infusion de sorte que l'orifice de sortie finit par faire partie de la chambre collectrice d'infusion (6).

2. Dispositif à boissons chaudes selon la revendication 1
**caractérisé en ce que**
le déplacement relatif naît du fait que le piston se déplace par rapport à la cloison de la chambre collectrice d'infusion de façon élastique à cause des forces de pression nées à l'intérieur de la chambre collectrice d'infusion suite à l'augmentation de la pression.

3. Dispositif à boissons chaudes selon la revendication 1
**caractérisé en ce que**
le déplacement relatif naît du fait que la cloison de la chambre collectrice d'infusion se déplace par rapport au piston de façon élastique à cause des forces de pression nées dans la chambre collectrice d'infusion suite à l'augmentation de la pression.

4. Dispositif à boissons chaudes selon la revendication 1,
**caractérisé en ce que**
le déplacement relatif naît du fait que et le piston et la cloison de la chambre collectrice d'infusion se déplacent de façon élastique à cause des forces de pression nées dans la chambre collectrice d'infusion suite l'augmentation de la pression.

5. Dispositif à boissons chaudes selon l'une des revendications 2 à 4
**caractérisé en ce que**
l'orifice de sortie consiste en une perforation formée dans la cloison de la chambre collectrice d'infusion, qu'un joint annullaire étanche collé à la face interne de la cloison de la chambre collectrice d'infusion est fixé au piston (3), que lors d'un déplacement relatif du piston (3) ce joint passe au-dessus de la perforation et lie ainsi la chambre collectrice d'infusion à l'atmosphère.

6. Dispositif à boissons chaudes selon la revendication 4,
**caractérisé en ce que**
la chambre collectrice d'infusion (6) consiste en une pomme d'arrosoir en forme de bol, que l'on peut l'insérer dans une coupelle en forme de bol et qu' au cours du fonctionnement du dispositif à boissons chaudes l'orifice de sortie formé dans la pomme d'arrosoir débouche dans un conduit entre la pomme d'arrosoir et la coupelle, lié à la sortie de la chambre collectrice d'infusion.

7. Dispositif selon la revendication 4
**caractérisé en ce que**
l'orifice de sortie est formé par une rainure située à la face interne de la cloison de la chambre collectrice d'infusion (6), passant le long de l'axe longitudinal de la chambre collectrice d'infusion (6).
